(19) **Europäisches Patentamt / European Patent Office / Office européen des brevets**

(11) **EP 4 678 456 A1**

(12) **EUROPEAN PATENT APPLICATION**
published in accordance with Art. 153(4) EPC

(43) Date of publication:
**14.01.2026 Bulletin 2026/03**

(21) Application number: **24766908.8**

(22) Date of filing: **22.02.2024**

(51) International Patent Classification (IPC):
**B60L 3/00** (2019.01)    **B60K 11/04** (2006.01)
**F25B 1/00** (2006.01)

(52) Cooperative Patent Classification (CPC):
**B60K 11/04; B60L 3/00; F25B 1/00**

(86) International application number:
**PCT/JP2024/006570**

(87) International publication number:
**WO 2024/185537 (12.09.2024 Gazette 2024/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **03.03.2023 JP 2023032909**

(71) Applicant: **DENSO CORPORATION
Kariya-city, Aichi 448-8661 (JP)**

(72) Inventors:
• **YAMAMOTO, Hiroyoshi**
  **Kariya-city, Aichi 448-8661 (JP)**
• **NUMATA, Masanari**
  **Kariya-city, Aichi 448-8661 (JP)**
• **YOKOYAMA, Naoki**
  **Kariya-city, Aichi 448-8661 (JP)**

(74) Representative: **TBK
Bavariaring 4-6
80336 München (DE)**

(54) **REFRIGERATION CYCLE DEVICE**

(57) The refrigeration cycle device includes: a heat medium circuit (30) through which a heat medium circulates; power train equipment (35, 36) which is electrical equipment for generating a driving force for running a vehicle and is cooled by the heat medium; a radiator (32) which exchanges heat between the heat medium and outside air; a chiller (17) which exchanges heat between a refrigerant of a refrigeration cycle and the heat medium; a circuit switching unit (38) which switches the heat medium circuit (30) between a first circulation state in which the heat medium circulates between the power train equipment (35, 36) and the radiator (32) and a second circulation state in which the heat medium circulates between the power train equipment (35, 36) and the chiller (17); and a control unit (60) which controls a heat balance of the power train equipment (35, 36) such that in the second circulation state, a temperature related to a temperature of the power train equipment (35, 36) does not exceed an upper limit temperature (WT1, PT1).

FIG.5

**Description**

[Cross Reference to Related Application]

The present application is based on Japanese Application No. 2023-32909 filed on March 3, 2023, the contents of which are incorporated herein by reference.

[Technical Field]

The present disclosure relates to a refrigeration cycle device that cools power train equipment.

[Background Art]

Conventionally, PTL1 discloses a refrigeration cycle device for vehicles which recovers exhaust heat of power train equipment such as an inverter and a motor generator and uses the recovered heat to heat a vehicle interior. The power train equipment is electrical equipment for generating a driving force for running a vehicle and generates heat during operation.
In this conventional technology, an evaporator for cooling a cooling water, a low-temperature side radiator, and power train equipment are parallelly disposed to a low-temperature cooling water circuit through which a low-temperature cooling water circulates. The evaporator for cooling a cooling water exchanges heat between a low-pressure refrigerant of a refrigeration cycle and the low-temperature cooling water of the low-temperature cooling water circuit so that the low-pressure refrigerant absorbs heat from the low-temperature cooling water. The low-temperature side radiator dissipates heat from the low-temperature cooling water to outside air.
In this conventional technology, the state of circulating the low-temperature cooling water between the power train equipment and the evaporator for cooling a cooling water and the state of circulating the low-temperature cooling water between the power train equipment and the low-temperature side radiator are switchable to each other by a three-way valve.
In the state of circulating the low-temperature cooling water between the power train equipment and the evaporator for cooling a cooling water, exhaust heat of the power train equipment is utilized for heating a vehicle interior. In the state of circulating the low-temperature cooling water between the power train equipment and the low-temperature side radiator, exhaust heat of the power train equipment is dissipated to outside air.

[Citation List]

[Patent Literature]

[PTL 1] Japanese Patent No. 6791052

[Summary of the Invention]

In the above-described conventional technology, efficiently cooling the power train equipment is not considered, and therefore downsizing of the power train equipment and improvement of running performance are limited.
In view of the above-described point, an object of the present disclosure is to efficiently cool the power train equipment.
A refrigeration cycle device according to an aspect of the present disclosure includes a heat medium circuit, power train equipment, a radiator, a chiller, a circuit switching unit, and a control unit.
A heat medium circulates through the heat medium circuit. The power train equipment is electrical equipment for generating a driving force for running a vehicle and is cooled by the heat medium. The radiator exchanges heat between the heat medium and outside air.
The chiller exchanges heat between a refrigerant of a refrigeration cycle and the heat medium. The circuit switching unit switches the heat medium circuit between a first circulation state in which the heat medium circulates between the power train equipment and the radiator and a second circulation state in which the heat medium circulates between the power train equipment and the chiller.
The control unit controls the heat balance of the power train equipment such that a temperature related to a temperature of the power train equipment does not exceed an upper limit temperature in the second circulation state.
Accordingly, the power train equipment can be efficiently cooled compared to when the power train equipment is cooled without controlling the heat balance of the power train equipment.

[Brief Description of the Drawings]

The above-described and other objects, features, and advantages of the present disclosure will become clearer from the following detailed description with reference to the accompanying drawings.

Fig. 1 is an entire configuration diagram illustrating a refrigeration cycle device of a first embodiment.
Fig. 2 is a block diagram illustrating an electrical control unit of the refrigeration cycle device of the first embodiment.
Fig. 3 is a configuration diagram illustrating a low-temperature cooling water circuit in a radiator heat dissipation mode of the refrigeration cycle device of the first embodiment.
Fig. 4 is a configuration diagram illustrating a low-temperature cooling water circuit in a chiller cooling mode of the refrigeration cycle device of the first embodiment.
Fig. 5 is a flowchart illustrating a part of a control process executed by a control device of the refrigeration cycle device of the first embodiment.
Fig. 6 is a time chart illustrating a control example in the refrigeration cycle device of the first embodiment.
Fig. 7 is a flowchart illustrating a part of a control process executed by a control device of a refrigeration cycle device of a second embodiment.
Fig. 8 is a time chart illustrating a control example in the refrigeration cycle device of the second embodiment.
Fig. 9 is a flowchart illustrating a part of a control process executed by a control device of a refrigeration cycle device of a third embodiment.
Fig. 10 is a control characteristics diagram for explaining a control process in the refrigeration cycle device of the third embodiment.
Fig. 11 is a flowchart illustrating a part of a control process executed by a control device of a refrigeration cycle device of a fourth embodiment.
Fig. 12 is a time chart illustrating a control example in the refrigeration cycle device of the fourth embodiment.
Fig. 13 is an entire configuration diagram illustrating a refrigeration cycle device of a fifth embodiment.

[Description of the Embodiments]

The embodiments of the present disclosure will be described below with reference to the drawings. A part in each embodiment corresponding to the matter described in the previous embodiment may be assigned with the same referential sign, and description thereof may be omitted. When only a part of a configuration of each embodiment is described, previously described other embodiments can be adopted for other parts of the configuration. Not only a combination of parts specifically described to be possible in each embodiment but also a partial combination of embodiments not specifically described are possible unless a problem is caused.

(First embodiment)

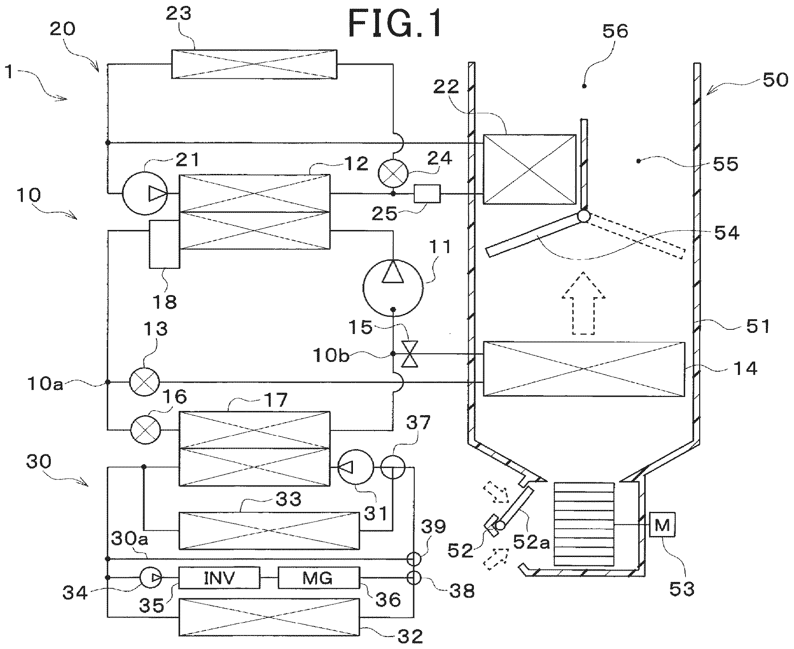

Hereinafter, embodiments will be described based on the drawings. A refrigeration cycle device 10 illustrated in Fig. 1 is applied to an air conditioner for vehicles 1 mounted to an electric vehicle or a hybrid vehicle. An electric vehicle is a vehicle that obtains a driving force for running from an electric motor. A hybrid vehicle is a vehicle that obtains a driving force for running the vehicle from an engine (i.e., internal combustion engine) and an electric motor for running.

The air conditioner for vehicles 1 is an air conditioner having a battery temperature adjusting function. The air conditioner for vehicles 1 air conditions a vehicle interior which is a space to be air conditioned and also adjusts the temperatures of a battery 33, an inverter 35, and a motor generator 36. Therefore, a cooling object in the refrigeration cycle device 10 of the present embodiment is air, the battery 33, the inverter 35, and the motor generator 36.

The battery 33 is a secondary battery that stores electric power to be supplied to vehicle-mounted equipment such as an electric motor. The battery 33 of the present embodiment is a lithium-ion battery. The battery 33 is a so-called assembled battery which is formed by laminating unillustrated battery cells and electrically connecting these battery cells in a serial or parallel manner.

The inverter 35 is an electric power conversion unit which converts DC power supplied from the battery 33 to AC power and outputs the converted power to the motor generator 36. The motor generator 36 utilizes the electric power outputted from the inverter 35 to generate a driving force for running and also generate regenerative electric power while the vehicle slows or descends a slope.

The inverter 35 and the motor generator 36 are electrical equipment (so-called power train equipment) for generating a driving force for running a vehicle and generate heat during operation.

The cooling object in the refrigeration cycle device 10 may be power train equipment such as a DCDC converter and a charger. The DCDC converter converts high-voltage DC power supplied from the battery 33 to low-voltage DC power and supplies the converted power to accessories mounted on the vehicle. The charger is used for charging the battery 33 with an external power source.

In the air conditioner for vehicles 1, the battery 33, the inverter 35, and the motor generator 36 can be cooled by cooling energy generated by the refrigeration cycle device 10.

The refrigeration cycle device 10 is a vapor compression refrigerator including a compressor 11, a condenser 12, a first expansion valve 13, a first evaporator 14, a constant-pressure valve 15, a second expansion valve 16, a chiller 17, and a receiver 18. In the refrigeration cycle device 10 of the present embodiment, a fluorocarbon-based refrigerant is used as the refrigerant, and a subcritical refrigeration cycle in which the high-pressure side refrigerant pressure does not exceed the critical pressure of the refrigerant is configured. Refrigerator oil (specifically, PAG oil) for lubricating the compressor 11 is mixed into the refrigerant. A part of the refrigerator oil circulates through the cycle together with the refrigerant.

The compressor 11 is an electric compressor to be driven by electric power supplied from the battery 33 and absorbs, compresses, and discharges the refrigerant of the refrigeration cycle device 10. The compressor 11 may be a variable capacity compressor to be driven by a belt.

The condenser 12 is a high-pressure side refrigerant-heat medium heat exchanger which exchanges heat between a high-pressure side refrigerant discharged from the compressor 11 and a cooling water of a high-temperature cooling water circuit 20 to thereby condense the high-pressure side refrigerant.

The cooling water of the high-temperature cooling water circuit 20 is fluid as a heat medium. The cooling water of the high-temperature cooling water circuit 20 is a high-temperature heat medium. In the present embodiment, liquid containing at least ethylene glycol, dimethylpolysiloxane, or nanofluid, or antifreeze liquid is used as the cooling water of the high-temperature cooling water circuit 20. The high-temperature cooling water circuit 20 is a high-temperature heat medium circuit through which a high-temperature heat medium circulates.

The receiver 18 is a gas-liquid separating unit which separates gas and liquid of the refrigerant discharged from the condenser 12 and discharges the liquid-phase refrigerant to the downstream side as well as stores the excess refrigerant of the cycle. The flow of the liquid-phase refrigerant discharged from the receiver 18 is bifurcated at a bifurcation 10a.

The first expansion valve 13 is a first decompression unit which decompresses and expands the liquid-phase refrigerant discharged from the receiver 18. The first expansion valve 13 is an electric variable throttle mechanism and has a valve body and an electric actuator. The valve body is configured such that the opening (i.e., throttle opening) of the flow path of the refrigerant is changeable. The electric actuator has a stepping motor that changes the throttle opening of the valve body.

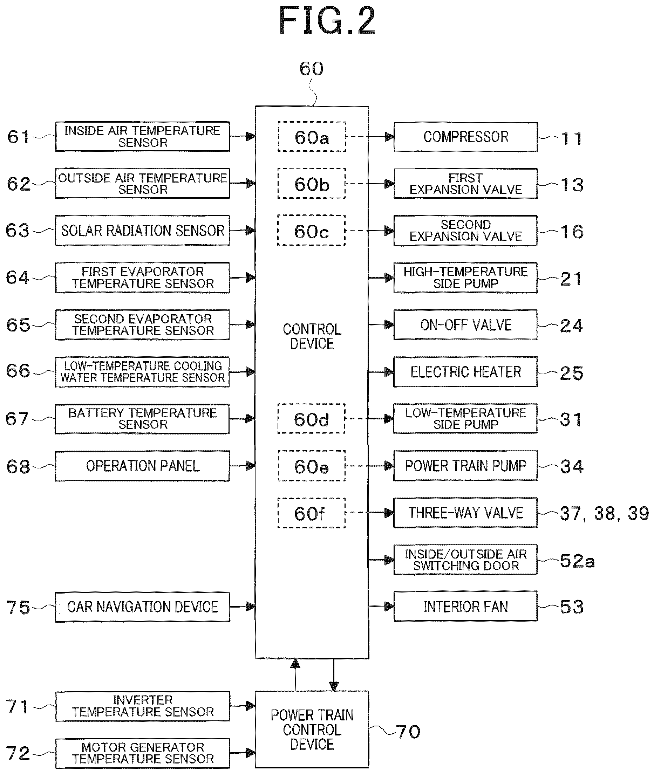

The first expansion valve 13 is configured by a variable throttle mechanism with a fully closing function for fully closing the flow path of the refrigerant. The operation of the first expansion valve 13 is controlled by a control signal outputted from a control device 60 illustrated in Fig. 2.

The first evaporator 14 is a refrigerant-air heat exchanger which exchanges heat between the refrigerant flowing from the first expansion valve 13 and air to be sent into the vehicle interior thereby to evaporate the refrigerant and cool the air to be sent into the vehicle interior. The first evaporator 14 is an evaporator for air which evaporates the refrigerant and cools air. The first evaporator 14 is a first evaporation unit.

The constant-pressure valve 15 is a pressure adjusting unit (i.e., decompression unit for adjusting a pressure) which maintains the pressure of the refrigerant on the outlet side of the first evaporator 14. The constant-pressure valve 15 suppresses frost formation on the first evaporator 14 by maintaining the pressure of the refrigerant (i.e., the temperature of the refrigerant) in the first evaporator 14 to a prescribed value or more.

The constant-pressure valve 15 is configured by a mechanical variable throttle mechanism. Specifically, the constant-pressure valve 15 decreases the area of the flow path of the refrigerant (i.e., throttle opening) in response to the pressure of the refrigerant on the outlet side of the first evaporator 14 falling below the prescribed value and increases the area of the flow path of the refrigerant (i.e., throttle opening) in response to the pressure of the refrigerant on the outlet side of the first evaporator 14 exceeding the prescribed value.

When the variation of the flow rate of the circulation refrigerant circulating through the cycle is small, for example, a fixed throttle constituted by an orifice, a capillary tube, or the like may be adopted in place of the constant-pressure valve 15.

The second expansion valve 16 and the chiller 17 are disposed parallelly to the first expansion valve 13, the first evaporator 14, and the constant-pressure valve 15 in the flow of the refrigerant.

The second expansion valve 16 is a second decompression unit which decompresses and expands the liquid-phase refrigerant discharged from the condenser 12. The second expansion valve 16 is an electric variable throttle mechanism and has a valve body and an electric actuator. The valve body is configured such that the opening (i.e., throttle opening) of the flow path of the refrigerant is changeable. The electric actuator has a stepping motor that changes the throttle opening of the valve body.

The second expansion valve 16 is configured by a variable throttle mechanism with a fully closing function for fully closing the flow path of the refrigerant. That is, the second expansion valve 16 can fully close the flow path of the refrigerant to block the flow of the refrigerant. The operation of the second expansion valve 16 is controlled by a control signal outputted from the control device 60.

The chiller 17 is a second evaporator which exchanges heat between the low-pressure refrigerant flowing from the second expansion valve 16 and a cooling water of a low-temperature cooling water circuit 30 to thereby evaporate the refrigerant and cool the cooling water. The chiller 17 is a low-pressure side refrigerant-heat medium heat exchanger. The chiller 17 is an evaporator for cooling which evaporates the refrigerant and cools the cooling water. The chiller 17 is a second evaporation unit.

The gas-phase refrigerant having evaporated in the chiller 17 joins the refrigerant flowing from the constant-pressure valve 15 at a join 10b and thereafter absorbed by the compressor 11 and compressed.

The cooling water of the low-temperature cooling water circuit 30 is fluid as a heat medium. The cooling water of the low-temperature cooling water circuit 30 is a low-temperature heat medium. In the present embodiment, liquid containing at least ethylene glycol, dimethylpolysiloxane, or nanofluid, or antifreeze liquid is used as the cooling water of the low-temperature cooling water circuit 30. The low-temperature cooling water circuit 30 is a low-temperature heat medium circuit through which the low-temperature heat medium circulates.

The high-temperature cooling water circuit 20 includes the condenser 12, a high-temperature side pump 21, a heater core 22, a high-temperature side radiator 23, an on-off valve 24, and an electric heater 25.

The high-temperature side pump 21 is a heat medium pump which absorbs and discharges the cooling water. The high-temperature side pump 21 is an electric pump. The high-temperature side pump 21 is a high-temperature side flow rate adjusting unit which adjusts the flow rate of the cooling water circulating through the high-temperature cooling water circuit 20.

The heater core 22 is a heat exchanger for heating air which exchanges heat between the cooling water of the high-temperature cooling water circuit 20 and air to be sent into the vehicle interior to heat the air to be sent into the vehicle interior. In the heater core 22, the cooling water dissipates heat to the air to be sent into the vehicle interior. The condenser 12, the high-temperature cooling water circuit 20, and the heater core 22 provide a heat dissipation unit which exchanges heat between the refrigerant discharged from the compressor 11 and the air to be sent into the vehicle interior to dissipate heat into air.

The high-temperature side radiator 23 is a high-temperature heat medium-outside air heat exchanger which exchanges heat between the cooling water of the high-temperature cooling water circuit 20 and outside air. The high-temperature side radiator 23 and the on-off valve 24 are disposed parallelly to the heater core 22 in the flow of the high-temperature side cooling water.

The on-off valve 24 is a solenoid valve which opens and closes the cooling water flow path on the high-temperature side radiator 23 side. The operation of the on-off valve 24 is controlled by the control device 60. The on-off valve 24 is a high-temperature switching unit which switches the flow of the cooling water in the high-temperature cooling water circuit 20.

The on-off valve 24 may be a thermostat. A thermostat is a cooling water temperature responsive valve having a mechanical mechanism in which the cooling water flow path is opened and closed by displacing a valve body with a thermowax which changes in volume depending on the temperature.

The electric heater 25 is an auxiliary heating unit which heats the cooling water of the high-temperature cooling water circuit 20 in an auxiliary manner. The electric heater 25 is an auxiliary heat source for heating air with the heater core 22. An example of the electric heater 25 is a PTC heater which generates heat by supplied electric power. The electric heater 25 is a Joule heat generation unit which generates Joule heat. The calorific value of the electric heater 25 is controlled by a control voltage outputted from the control device 60.

The low-temperature cooling water circuit 30 includes the chiller 17, a low-temperature side pump 31, a low-temperature side radiator 32, the battery 33, a power train pump 34, the inverter 35, the motor generator 36, a battery three-way valve 37, a power train three-way valve 38, and a bypass three-way valve 39.

The low-temperature side pump 31 is a heat medium pump which absorbs and discharges the cooling water. The low-temperature side pump 31 is an electric pump. The low-temperature side pump 31 is a low-temperature side flow rate adjusting unit which adjusts the flow rate of the cooling water circulating through the low-temperature cooling water circuit 30. The low-temperature side radiator 32 is a low-temperature heat medium-outside air heat exchanger which exchanges heat between the cooling water of the high-temperature cooling water circuit 30 and outside air.

The battery 33 is a vehicle mounted equipment mounted to a vehicle and is also heat generation equipment which generates heat during operation. The battery 33 dissipates waste heat generated during operation to the cooling water of the low-temperature cooling water circuit 30. In other words, the battery 33 supplies heat to the cooling water of the low-temperature cooling water circuit 30.

The power train pump 34 is a heat medium pump which absorbs and discharges the cooling water in order to circulate the cooling water through the inverter 35 and the motor generator 36 which are power train equipment.

The low-temperature side radiator 32, the battery 33, the inverter 35, the motor generator 36, and a bypass flow path 30a are disposed parallelly to one another in the flow of the cooling water. The battery three-way valve 37, the power train three-way valve 38, and the bypass three-way valve 39 are a heat medium flow switching unit which switches the flow of the cooling water of the low-temperature cooling water circuit 30. The battery three-way valve 37, the power train three-way valve 38, and the bypass three-way valve 39 are a circuit switching unit which switches the low-temperature cooling water circuit 30.

The battery three-way valve 37 switches the flow of the cooling water to the battery 33. The power train three-way valve 38 switches the flow of the cooling water to the inverter 35 and the motor generator 36. The bypass three-way valve 39 switches the flow of the cooling water to the bypass flow path 30a.

The operation of the battery three-way valve 37, the power train three-way valve 38, and the bypass three-way valve 39 is controlled by the control device 60.

The first evaporator 14 and the heater core 22 are housed in a casing 51 (hereinafter, referred to as air conditioning casing) of an interior air conditioning unit 50. The interior air conditioning unit 50 is disposed inside an unillustrated instrument panel in the front part of the vehicle interior. The air conditioning casing 51 is an air channel forming member which forms an air channel.

The heater core 22 is disposed on the air flow downstream side of the first evaporator 14 in the air channel inside the air conditioning casing 51. The air conditioning casing 51 includes an inside/outside air switching box 52 and an interior fan 53. The inside/outside air switching box 52 has an inside/outside air switching door 52a. The inside/outside air switching door 52a is an inside/outside air switching unit which switches between and introduces inside air and outside air into the air channel inside the air conditioning casing 51. The inside/outside air switching door 52a is an inside/outside air adjusting unit which adjusts the ratio between inside air and outside air introduced into the air channel inside the air conditioning casing 51.

The interior fan 53 absorbs and blows inside air and outside air introduced into the air channel inside the air conditioning casing 51 through the inside/outside air switching box 52. The inside/outside air switching door 52a and the interior fan 53 are controlled by the control device 60.

An air mix door 54 is disposed between the first evaporator 14 and the heater core 22 in the air channel inside the air conditioning casing 51. The air mix door 54 adjusts the air volume ratio between cold air flowing into the heater core 22 and cold air flowing through a cold-air bypass channel 55 in the cold air having passed through the first evaporator 14.

The cold air bypass channel 55 is an air channel through which cold air having passed through the first evaporator 14 flows while bypassing the heater core 22.

The air mix door 54 is a revolving door having a rotation shaft rotatably supported to the air conditioning casing 51 and a door base plate unit connected to the rotation shaft. The opening position of the air mix door 54 can be adjusted such that the temperature of conditioning air blown out from the air conditioning casing 51 to the vehicle interior is adjusted to a desired temperature.

The rotation shaft of the air mix door 54 is driven by a servomotor. The operation of servomotor is controlled by the control device 60.

The air mix door 54 may be a slide door which slides in a direction substantially orthogonal to the air flow. The slide door may be a plate-like door formed by a rigid body. The slide door may be a film door formed by a film material having flexibility.

The conditioning air adjusted in temperature by the air mix door 54 is blown out from an outlet 56 formed to the air conditioning casing 51 into the vehicle interior.

The control device 60 illustrated in Fig. 2 is configured by a known micro-computer containing a CPU, a ROM, a RAM, and the like and peripheral circuits thereof. The control device 60 performs various arithmetic operations and processes based on control programs stored in the ROM. Various types of equipment to be controlled are connected to the output side of the control device 60. The control device 60 is a control unit which controls the operations of various types of equipment to be controlled.

Examples of the equipment to be controlled by the control device 60 include the compressor 11, the first expansion valve 13, the second expansion valve 16, the high-temperature side pump 21, the on-off valve 24, the electric heater 25, the low-temperature side pump 31, the power train pump 34, the battery three-way valve 37, the power train three-way valve 38, the bypass three-way valve 39, the inside/outside air switching door 52a, and the interior fan 53.

The electric motor of the compressor 11 is controlled by a refrigerant discharge capability control unit 60a provided in the control device 60 which may use hardware and/or software. The first expansion valve 13 is controlled by a first throttle control unit 60b provided in the control device 60 which may use hardware and/or software. The second expansion valve 16 is controlled by a second throttle control unit 60c provided in the control device 60 which may use hardware and/or software. The second throttle control unit 60c is a cooling switching unit which switches between a chiller cooling state of cooling the cooling water by the chiller 17 and a chiller non-cooling state of not cooling the cooling water by the chiller 17.

The high-temperature side pump 21 is controlled by a high-temperature heat medium flow rate control unit provided in the control device 60 which may use hardware and/or software. The on-off valve 24 is controlled by an on-off valve control unit provided in the control device 60 which may use hardware and/or software.

The electric heater 25 is controlled by an auxiliary heating control unit provided in the control device 60 which may use hardware and/or software. The low-temperature side pump 31 is controlled by a first heat medium flow rate control unit 60d provided in the control device 60 which may use hardware and/or software. The power train pump 34 is controlled by a second heat medium flow rate control unit 60e provided in the control device 60 which may use hardware and/or software. The battery three-way valve 37, the power train three-way valve 38, and the bypass three-way valve 39 are controlled by a heat medium flow control unit 60f provided in the control device 60 which may use hardware and/or software. The heat medium flow control unit 60f is a circuit switching determination unit which determines switching of the cooling water circulation state in the low-temperature cooling water circuit 30.

The input side of the control device 60 is connected with various control sensors such as an inside air temperature sensor 61, an outside air temperature sensor 62, a solar radiation sensor 63, a first evaporator temperature sensor 64, a second evaporator temperature sensor 65, a low-temperature cooling water temperature sensor 66, and a battery temperature sensor 67.

The inside air temperature sensor 61 detects a vehicle interior temperature Tr. The outside air temperature sensor 62 detects an outside air temperature Tam. The solar radiation sensor 63 detects a solar radiation AS in the vehicle interior.

The first evaporator temperature sensor 64 is a temperature detection unit which detects a temperature TE1 (hereinafter, referred to as first evaporator temperature) of the first evaporator 14. Examples of the first evaporator temperature sensor 64 include a fin thermistor which detects the temperature of the heat exchange fin of the first evaporator 14 and a refrigerant temperature sensor which detects the temperature of the refrigerant flowing through the first evaporator 14.

The second evaporator temperature sensor 65 is a temperature detection unit which detects a temperature TE2 (hereinafter, referred to as second evaporator temperature) of the chiller 17. An example of the second evaporator temperature sensor 65 is a refrigerant temperature sensor which detects the temperature of the refrigerant flowing through the chiller 17.

The low-temperature cooling water temperature sensor 66 is a temperature detection unit which detects a temperature TW of the cooling water of the low-temperature cooling water circuit 30. For example, the low-temperature cooling water temperature sensor 66 detects the temperature of the cooling water in the chiller 17.

The battery temperature sensor 67 is a battery temperature detection unit which detects a temperature TB of the battery 33. The battery temperature sensor 67 is desirably configured by a plurality of temperature sensors which detects the temperatures at a plurality of locations of the battery 33.

The input side of the control device 60 is connected with various operation switches disposed to an operation panel 68. The various operation switches are operated by a passenger. The operation panel 68 is disposed around an instrument panel in the front part of the vehicle interior. Operation signals from the various operation switches are inputted to the control device 60.

Examples of the various operation switches include a running-mode setting switch, an air conditioning switch, and a temperature setting switch. The running-mode setting switch is a switch for switching the running mode of the vehicle among an eco mode, a normal mode, and a sports mode.

The eco mode is a running mode in which priority is given to energy saving so that the power of the motor generator 36 tends to be suppressed. The sports mode is a running mode in which priority is not given to energy saving so that the power of the motor generator 36 is not restricted. The normal mode is a running mode between the eco mode and the sports mode.

The air conditioning switch is a switch for setting whether to cool air by the interior air conditioning unit 50. The temperature setting switch is a switch for setting the set temperature of the vehicle interior.

The input side and the output side of the control device 60 are connected with a power train control device 70. The power train control device 70 is a power train control device which controls the inverter 35 and the motor generator 36 which are power train equipment.

The required output value of the motor generator 36 is inputted from the power train control device 70 to the control device 60.

The input side of the power train control device 70 is connected with an inverter temperature sensor 71 and a motor generator temperature sensor 72.

The inverter temperature sensor 71 is a power train equipment temperature detection unit which detects the temperature of the inverter 35. The motor generator temperature sensor 72 is a power train equipment temperature detection unit which detects the temperature of the motor generator 36.

The detection signals of the inverter temperature sensor 71 and the motor generator temperature sensor 72 are inputted to the control device 60 through the power train control device 70.

The input side of the control device 60 is connected with a car navigation device 75. Map information, traffic congestion information, and the like are inputted from the car navigation device 75 to the control device 60.

Of information dealt by the control device 60, the required output value of the motor generator 36, the temperature of the inverter 35, the temperature of the motor generator 36, the map information and traffic congestion information, and the like are running state-related information. The running state-related information is information related to the running state of a vehicle.

Next, the operation in the above-described configuration will be described. First, the outline of an operation related to air conditioning will be described.

The control device 60 determines operation conditions of the various types of control equipment connected to the control device 60 (i.e., control signals to be outputted to the various types of control equipment) based on a target blowing temperature TAO, the detection signals of the sensors, and the like.

The target blowing temperature TAO is the target temperature of blown air blown into the vehicle interior. The target blowing temperature TAO is an index indicating air conditioning load (i.e., air conditioning heat load) required of the air conditioner for vehicles 1. The control device 60 calculates the target blowing temperature TAO according to mathematical formula F1.

$$TAO = Kset \times Tset - Kr \times Tr - Kam \times Tam - Ks \times AS + C \ ... \ (F1)$$

In this mathematical formula, Tset is a vehicle interior set temperature set by the temperature setting switch of the operation panel 68, Tr is an inside air temperature detected by the inside air temperature sensor 61, Tam is an outside air temperature detected by the outside air temperature sensor 62, and AS is a solar radiation detected by the solar radiation sensor 63. Kset, Kr, Kam, and Ks are a control gain, and C is a constant for correction.

A control signal to be outputted to the compressor 11 (i.e., the rotational speed of the compressor 11) is determined based on the deviation between a target temperature TEO and the temperature TE1 of the first evaporator 14 by a feedback control method, such that the temperature TE1 of the first evaporator 14 approaches the target temperature TEO.

The target temperature TEO is determined based on the target blowing temperature TAO with reference to a control map stored in the control device 60. In the control map of the present embodiment, the target temperature TEO is determined such that it increases with an increase in the target blowing temperature TAO.

In the refrigeration cycle device 10 during an air conditioning mode, the state of the refrigerant circulating through the cycle changes as follows.

A high-pressure refrigerant blown from the compressor 11 flows into the condenser 12. The refrigerant having flowed into the condenser 12 dissipates heat to the cooling water of the high-temperature cooling water circuit 20. Accordingly, the refrigerant is cooled and condensed in the condenser 12.

The refrigerant having flowed from the condenser 12 flows into the first expansion valve 13 and is decompressed and expanded by the first expansion valve 13 until it becomes a low-pressure refrigerant. The low-pressure refrigerant decompressed by the first expansion valve 13 flows into the first evaporator 14, and then absorbs heat from air to be sent into the vehicle interior and evaporates. Accordingly, the air to be sent into the vehicle interior is cooled.

The refrigerant flowing from the first evaporator 14 flows to the absorption side of the compressor 11 and is compressed again in the compressor 11.

The cooling water of the high-temperature cooling water circuit 20 having received heat dissipated from the refrigerant in the condenser 12 is circulated to the heater core 22. In the heater core 22, the air cooled in the first evaporator 14 is heated by the cooling water of the high-temperature cooling water circuit 20.

As described above, the low-pressure refrigerant can absorb heat from air to cool the air in the first evaporator 14, and the cooled air can be heated in the heater core 22 and blown into the vehicle interior. Accordingly, air conditioning of the vehicle interior can be achieved.

Next, an operation concerning cooling of the inverter 35 and the motor generator 36 will be described. The control device 60 switches the circulation mode of the cooling water of the low-temperature cooling water circuit 30 to the inverter 35 and the motor generator 36 into one of a radiator heat dissipation mode and a chiller cooling mode. The radiator heat dissipation mode is a first circulation state of the low-temperature cooling water circuit 30, and the chiller cooling mode is a second circulation state of the low-temperature cooling water circuit 30.

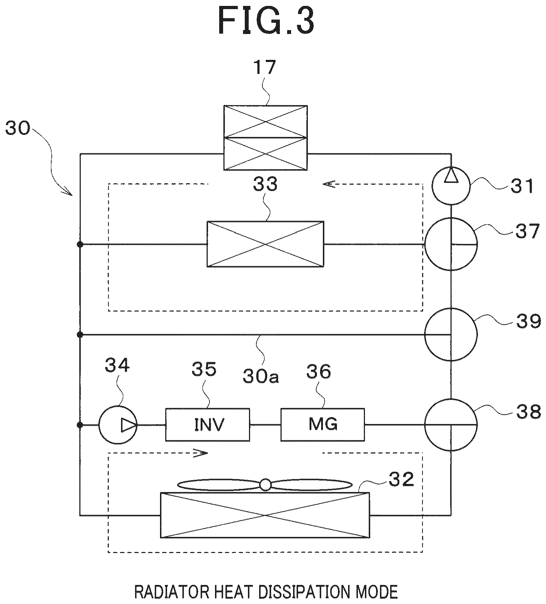

In the radiator heat dissipation mode, the low-temperature side pump 31 and the power train pump 34 are operated, and as illustrated by broken line arrows in Fig. 3, the power train three-way valve 38 and the bypass three-way valve 39 are switched such that the cooling water circulates between the chiller 17 and the bypass flow path 30a and such that the cooling water circulates between the inverter 35/the motor generator 36 and the low-temperature side radiator 32. Accordingly, the cooling water circulating through the bypass flow path 30a is cooled by the chiller 17, and the exhaust heat of the inverter 35 and the motor generator 36 is dissipated to outside air by the low-temperature side radiator 32.

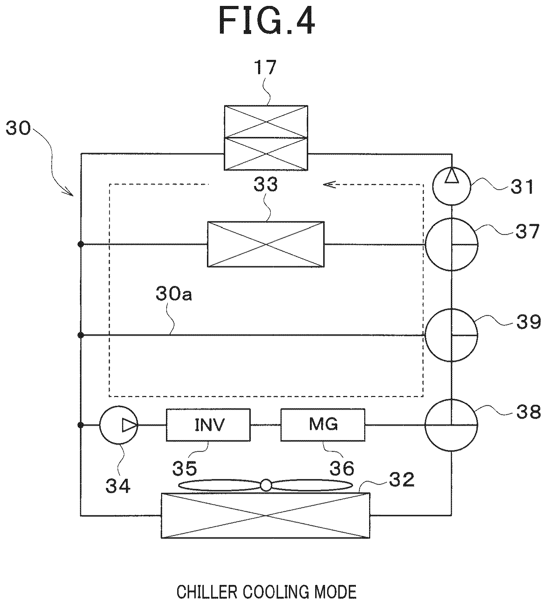

In the chiller cooling mode, at least one of the low-temperature side pump 31 and the power train pump 34 is operated, and as illustrated by a broken line arrow in Fig. 4, the power train three-way valve 38 is switched such that the cooling water circulates between the inverter 35/the motor generator 36 and the chiller 17. Accordingly, the exhaust heat of the inverter 35 and the motor generator 36 is absorbed by the refrigerant of the refrigeration cycle device 10 in the chiller 17.

In the chiller cooling mode, the inverter 35 and the motor generator 36 are cooled using the refrigeration cycle device 10, so that the cooling capability of the inverter 35 and the motor generator 36 is higher than that in the radiator heat dissipation mode in which the exhaust heat of the inverter 35 and the motor generator 36 is dissipated to outside air.

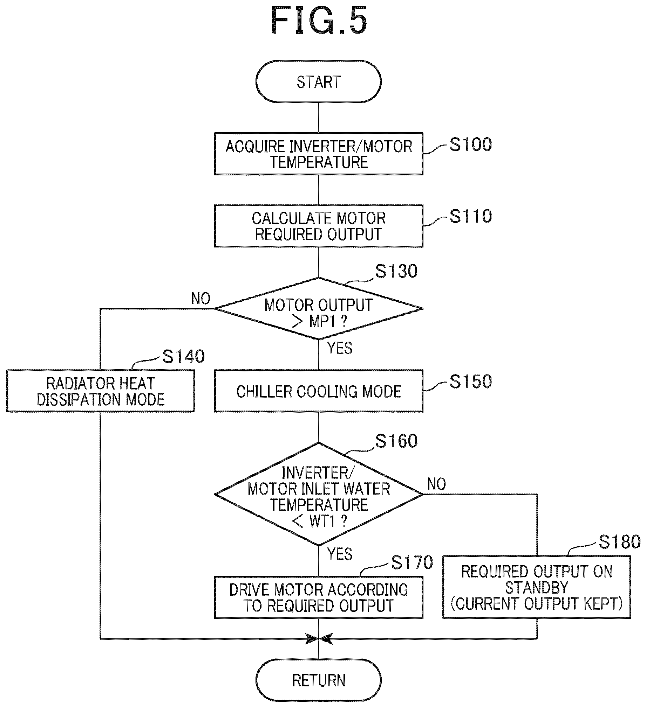

Fig. 5 is a flowchart illustrating a control process executed by the control device 60. In step S100, the temperature of the inverter 35 detected by the inverter temperature sensor 71 and the temperature of the motor generator 36 detected by the motor generator temperature sensor 72 are acquired.

In step S110, the required output of the motor generator 36 is calculated based on the vehicle state, the accelerator opening, the running resistance, and the like.

In step S130, it is judged if the required output of the motor generator 36 calculated in step S110 exceeds a threshold MP1. The threshold MP1 is the power (i.e., predetermined power) of the motor generator 36 when the cooling capability of the inverter 35 and the motor generator 36 becomes insufficient in the radiator heat dissipation mode.

When it is judged that the required output of the motor generator 36 does not exceed the threshold MP1 in step S130, the process proceeds to step S140, and the circulation mode of the low-temperature cooling water circuit 30 is set to the radiator heat dissipation mode. Accordingly, as illustrated in Fig. 3, the exhaust heat of the inverter 35 and the motor generator 36 is dissipated to outside air by the low-temperature side radiator 32.

When it is judged that the required output of the motor generator 36 exceeds the threshold MP1 in step S130, the process proceeds to step S150, and the circulation mode of the low-temperature cooling water circuit 30 is set to the chiller cooling mode. Accordingly, as illustrated in Fig. 4, the inverter 35 and the motor generator 36 are cooled by the cooling water cooled by the chiller 17 of the refrigeration cycle device 10.

In step S160, it is judged if the temperature (hereinafter, referred to as equipment inlet water temperature) of the cooling water flowing into the inverter 35 and the motor generator 36 is below an upper limit temperature WT1.

When it is judged in step S160 that the equipment inlet water temperature is below the upper limit temperature WT1, the process proceeds to step S170, and the power train control device 70 is permitted to drive the motor generator 36 according to the required output. Accordingly, the motor generator 36 is driven according to the required output.

When it is judged in step S160 that the equipment inlet water temperature is not below the upper limit temperature WT1, the process proceeds to step S180, and the power train control device 70 is prohibited from driving the motor generator 36 according to the required output. Accordingly, the output of the motor generator 36 remains unchanged, so that the equipment inlet water temperature can be quickly cooled to the upper limit temperature WT1 or lower.

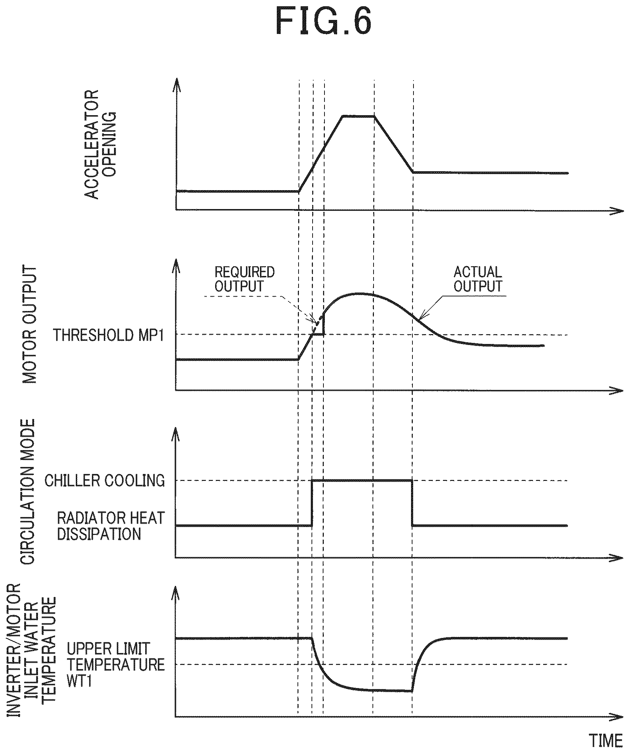

A control example by the present embodiment is illustrated in Fig. 6. In this control example, the required output of the motor generator 36 increases with an increase in the accelerator opening. In response to the required output of the motor generator 36 exceeding the threshold MP1, the circulation mode of the low-temperature cooling water circuit 30 is switched from the radiator heat dissipation mode to the chiller cooling mode. Accordingly, the cooling capability of the cooling water of the low-temperature cooling water circuit 30 improves, so that the equipment inlet water temperature decreases.

Here, the output of the motor generator 36 is restricted while the equipment inlet water temperature is the upper limit temperature WT1 or higher. That is, even when the required output of the motor generator 36 increases, the actual output remains unchanged without being increased. Accordingly, an increase in the calorific value of the inverter 35 and the motor generator 36 is suppressed, so that the equipment inlet water temperature quickly decreases.

In response to the equipment inlet water temperature being below the upper limit temperature WT1, the output restriction of the motor generator 36 is cancelled, and the actual output becomes the same as the required output.

Thereafter, in response to the required output of the motor generator 36 being equal to or below the threshold MP1 with a decrease in the accelerator opening, the circulation mode of the low-temperature cooling water circuit 30 is switched from the chiller cooling mode to the radiator heat dissipation mode. Accordingly, the exhaust heat of the inverter 35 and the motor generator 36 is dissipated to outside air without using the refrigeration cycle device 10, so that energy saving is achieved in the cooling of the inverter 35 and the motor generator 36.

In the present embodiment, the control device 60 controls the heat balance of the inverter 35 and the motor generator 36 such that the temperature of the cooling water flowing into the inverter 35 and the motor generator 36 (i.e., temperature related to the temperature of the inverter 35 and the motor generator 36) does not exceed the upper limit temperature WT1 in the chiller cooling mode.

Accordingly, the power train equipment can be efficiently cooled compared to when the power train equipment is cooled without controlling the heat balance of the power train equipment.

Specifically, the control device 60 restricts the output of the motor generator 36 such that the temperature of the cooling water flowing into the inverter 35 and the motor generator 36 does not exceed the upper limit temperature WT1 in the chiller cooling mode.

Accordingly, the heat balance of the power train equipment can be effectively controlled by controlling the calorific value of the power train equipment.

In the present embodiment, in response to the power of the motor generator 36 reaching the threshold MP1, the control device 60 determines to switch to the chiller cooling mode and also restricts the output of the motor generator 36 until the temperature of the cooling water of the low-temperature cooling water circuit 30 becomes the upper limit temperature WT1 or lower.

Accordingly, the calorific value of the inverter 35 and the motor generator 36 can be appropriately controlled.

(Second embodiment)

In the above-described embodiment, the output of the motor generator 36 is restricted such that the temperature of the cooling water flowing into the inverter 35 and the motor generator 36 does not exceed the upper limit temperature WT1.

On the other hand, in the present embodiment, switching to the chiller cooling mode is performed such that the temperature of the inverter 35 and the motor generator 36 does not exceed the upper limit temperature PT1.

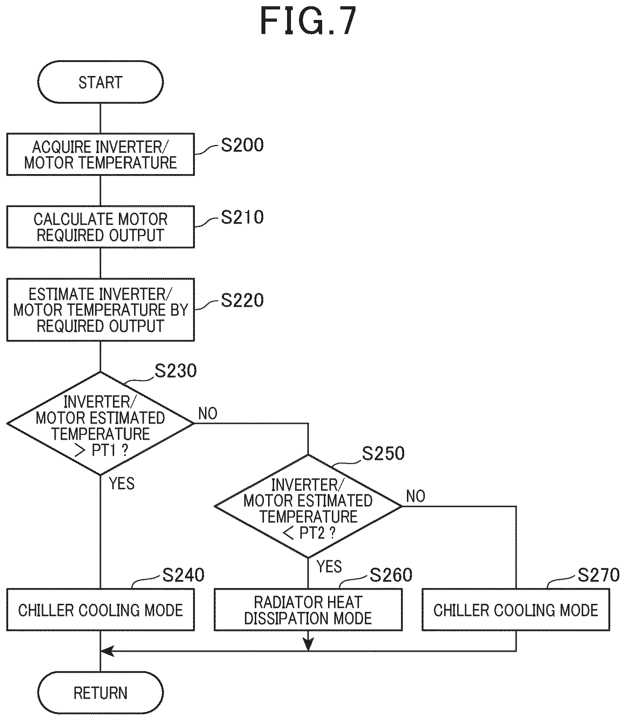

Fig. 7 is a flowchart illustrating a control process executed by the control device 60. In step S200, the temperature of the inverter 35 detected by the inverter temperature sensor 71 and the temperature of the motor generator 36 detected by the motor generator temperature sensor 72 are acquired.

In step S210, the required output of the motor generator 36 is calculated based on the vehicle state, the accelerator opening, the running resistance, and the like. The vehicle state, the accelerator opening, the running resistance, and the like are running state-related information.

In step S220, the temperature of the inverter 35 and the motor generator 36 (hereinafter, referred to as equipment temperature) is estimated based on the required output of the motor generator 36 calculated in step S210.

In step S230, it is judged if an equipment temperature estimated in step S220 (hereinafter, referred to as estimated equipment temperature) exceeds the upper limit temperature PT1. The upper limit temperature PT1 is an equipment temperature when the cooling capability of the inverter 35 and the motor generator 36 becomes insufficient in the radiator heat dissipation mode.

When the estimated equipment temperature is judged as exceeding the upper limit temperature PT1 in step S230, the process proceeds to step S240, and the circulation mode of the low-temperature cooling water circuit 30 is set to the chiller cooling mode. Accordingly, as illustrated in Fig. 4, the inverter 35 and the motor generator 36 are cooled by the cooling water cooled by the chiller 17 of the refrigeration cycle device 10.

When the estimated equipment temperature is judged as not exceeding the upper limit temperature PT1 in step S230, the process proceeds to step S250, and it is judged if the estimated equipment temperature is below a switching temperature PT2. The switching temperature PT2 is an equipment temperature when the cooling capability of the inverter 35 and the motor generator 36 becomes sufficient even in the radiator heat dissipation mode.

When the estimated equipment temperature is judged as being below the switching temperature PT2 in step S250, the process proceeds to step S260, and the circulation mode of the low-temperature cooling water circuit 30 is set to the radiator heat dissipation mode. Accordingly, as illustrated in Fig. 3, the exhaust heat of the inverter 35 and the motor generator 36 is dissipated to outside air by the low-temperature side radiator 32.

When the estimated equipment temperature is judged as not being below the switching temperature PT2 in step S250, the process proceeds to step S270, and the circulation mode of the low-temperature cooling water circuit 30 is set to the chiller cooling mode. Accordingly, as illustrated in Fig. 4, the inverter 35 and the motor generator 36 are cooled by the cooling water cooled by the chiller 17 of the refrigeration cycle device 10.

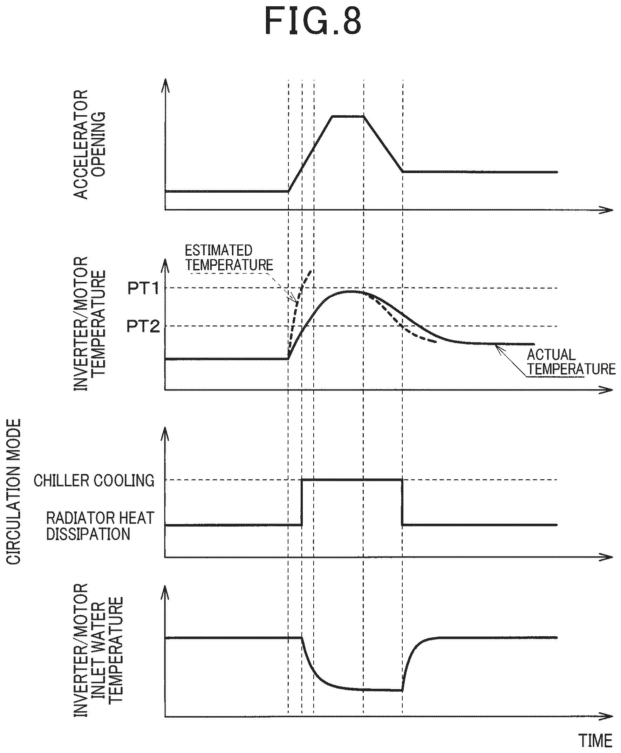

A control example by the present embodiment is illustrated in Fig. 8. In this control example, the required output of the motor generator 36 increases with an increase in the accelerator opening, and the estimated equipment temperature (i.e., estimated temperature of the inverter 35 and the motor generator 36) also increases. When the estimated equipment temperature exceeds the upper limit temperature PT1, the circulation mode of the low-temperature cooling water circuit 30 is switched from the radiator heat dissipation mode to the chiller cooling mode. Accordingly, the cooling capability of the cooling water of the low-temperature cooling water circuit 30 improves, and the equipment inlet water temperature decreases. Therefore, the increase of the actual equipment temperature is suppressed.

In response to the estimated equipment temperature being below the switching temperature PT2, the circulation mode of the low-temperature cooling water circuit 30 is switched from the chiller cooling mode to the radiator heat dissipation mode. Accordingly, the exhaust heat of the inverter 35 and the motor generator 36 is dissipated to outside air without using the refrigeration cycle device 10, so that energy saving is achieved in the cooling of the inverter 35 and the motor generator 36.

In the present embodiment, the control device 60 controls the power train three-way valve 38 in the chiller cooling mode, such that the temperature of the inverter 35 and the motor generator 36 does not exceed the upper limit temperature PT1, which controls the heat balance of the inverter 35 and the motor generator 36.

Accordingly, the heat balance of the inverter 35 and the motor generator 36 can be effectively controlled by controlling the heat absorption amount from the inverter 35 and the motor generator 36.

In the present embodiment, the control device 60 calculates the estimated output and the estimated temperature of the inverter 35 and the motor generator 36 based on information related to the running state of the vehicle such as the vehicle state, the accelerator opening, and the running resistance. Then, when the estimated temperature of the inverter 35 and the motor generator 36 is judged as exceeding the upper limit temperature PT1, the power train three-way valve 38 is controlled to switch to the chiller cooling mode such that the temperature of the inverter 35 and the motor generator 36 does not exceed the upper limit temperature PT1.

Accordingly, it is possible to ensure that the temperature of the inverter 35 and the motor generator 36 does not exceed the upper limit temperature PT1.

(Third embodiment)

Although the upper limit temperature PT1 is a constant fixed value in the above-described embodiment, the upper limit temperature PT1 is changed depending on a vehicle running mode selected by the passenger in the present embodiment.

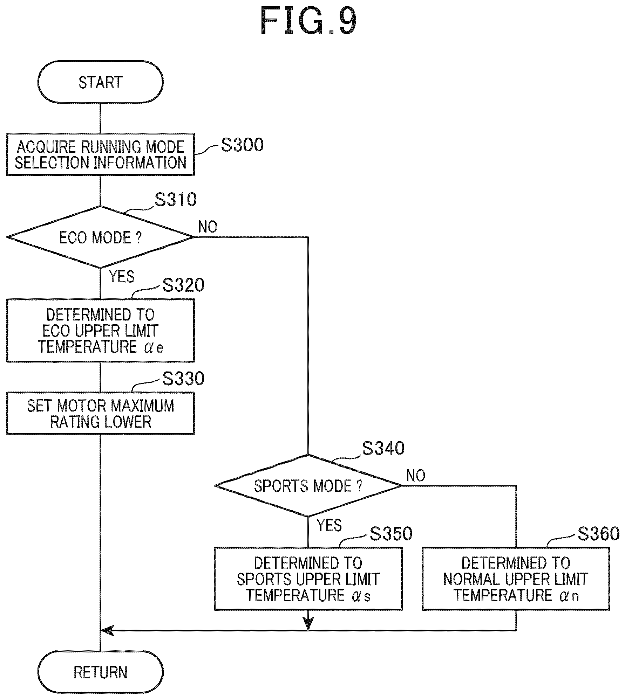

Fig. 9 is a flowchart illustrating a control process executed by the control device 60. In step S300, a vehicle running mode selected by the passenger is acquired. In step S310, it is judged if the vehicle running mode is the eco mode. When the vehicle running mode is judged as being the eco mode in step S310, the process proceeds to steps S320 to S330, and the upper limit temperature PT1 is determined to be an eco upper limit temperature $\alpha e$ while the maximum rating of the motor generator 36 is set to be low.

When the vehicle running mode is judged as not being the eco mode in step S310, the process proceeds to step S340, and it is judged if the vehicle running mode is the sports mode. When the vehicle running mode is judged as being the sports mode in step S340, the process proceeds to step S350, and the upper limit temperature PT1 is determined to be a sports upper limit temperature $\alpha s$.

When the vehicle running mode is judged as not being the sports mode in step S340, the process proceeds to step S360, and the upper limit temperature PT1 is determined to be a normal upper limit temperature $\alpha n$.

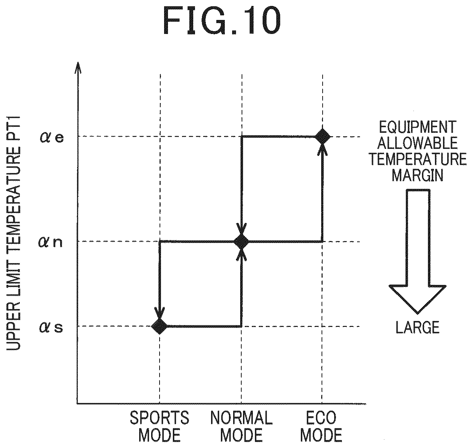

As illustrated in Fig. 10, the eco upper limit temperature $\alpha e$ is a temperature higher than the normal upper limit temperature $\alpha n$, and the sports upper limit temperature $\alpha s$ is a temperature lower than the normal upper limit temperature $\alpha n$. Therefore, in the eco mode, it is difficult to switch the circulation mode of the low-temperature cooling water circuit 30 from the radiator heat dissipation mode to the chiller cooling mode, so that energy saving is achieved in the refrigeration cycle device 10. In the sports mode, it is easy to switch the circulation mode of the low-temperature cooling water circuit 30 from the radiator heat dissipation mode to the chiller cooling mode, so that the output of the motor generator 36 (i.e., acceleration of the vehicle) has priority over energy saving.

In the present embodiment, the control device 60 determines the upper limit temperature PT1 based on the running mode of the vehicle, so that the temperature of the inverter 35 and the motor generator 36 can be appropriately controlled depending on the running mode of the vehicle.

(Fourth embodiment)

In the present embodiment, the rotational speed of the low-temperature side pump 31 is increased in order to quickly supply the cooling water to the inverter 35 and the motor generator 36 in switching from the radiator heat dissipation mode to the chiller cooling mode.

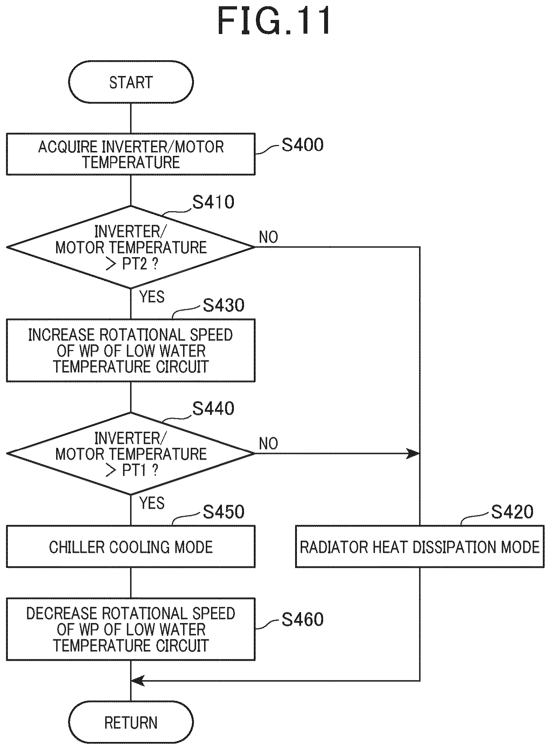

Fig. 11 is a flowchart illustrating a control process executed by the control device 60. In step S400, an estimated temperature of the inverter 35 and the motor generator 36 (hereinafter, referred to as estimated equipment temperature) is acquired.

In step S410, it is judged if the estimated equipment temperature exceeds a switching temperature PT2. The switching temperature PT2 is a temperature lower than the upper limit temperature PT1. When the estimated equipment temperature is judged as not exceeding the switching temperature PT2 in step S410, the process proceeds to step S420, and the circulation mode of the low-temperature cooling water circuit 30 is set to the radiator heat dissipation mode. Accordingly, as illustrated in Fig. 3, the exhaust heat of the inverter 35 and the motor generator 36 is dissipated to outside air by the low-temperature side radiator 32.

When the estimated equipment temperature is judged as exceeding the switching temperature PT2 in step S410, the process proceeds to step S430, and the rotational speed of the low-temperature side pump 31 is increased. Accordingly, the pressure of the cooling water of the low-temperature cooling water circuit 30 increases. In step S430, the rotational speed of the low-temperature side pump 31 is increased as the equipment temperature approaches the upper limit temperature PT1.

In step S440, it is judged if the estimated equipment temperature exceeds the upper limit temperature PT1. When the estimated equipment temperature is judged as exceeding the upper limit temperature PT1 in step S440, the process proceeds to step S450, and the circulation mode of the low-temperature cooling water circuit 30 is switched from the radiator heat dissipation mode to the chiller cooling mode. Accordingly, as illustrated in Fig. 4, the inverter 35 and the motor generator 36 are cooled by the cooling water cooled by the chiller 17 of the refrigeration cycle device 10.

Since the pressure of the cooling water of the low-temperature cooling water circuit 30 is high at this time, the cooling water can be quickly supplied to the inverter 35 and the motor generator 36. Then, the rotational speed of the low-temperature side pump 31 is decreased to the original in step S460.

When the estimated equipment temperature is judged as not exceeding the upper limit temperature PT1 in step S440, the process proceeds to step S420, and the circulation mode of the low-temperature cooling water circuit 30 is set to the radiator heat dissipation mode.

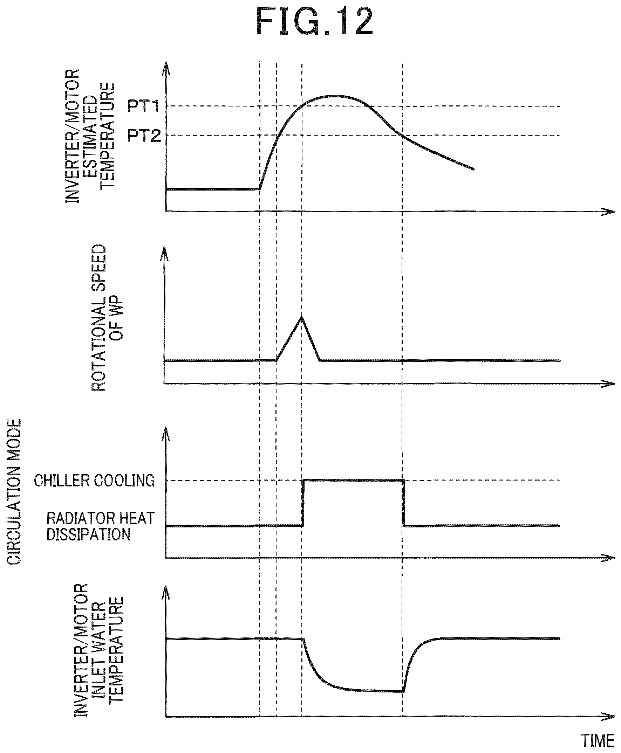

A control example by the present embodiment is illustrated in Fig. 12. In this control example, the rotational speed of the low-temperature side pump 31 is increased in response to the estimated equipment temperature increasing to exceed the switching temperature PT2. Accordingly, the pressure of the cooling water of the low-temperature cooling water circuit 30 increases. At this time, the rotational speed of the low-temperature side pump 31 is increased as the estimated equipment temperature approaches the upper limit temperature PT1.

When the estimated equipment temperature further increases to exceed the upper limit temperature PT1, the circulation mode of the low-temperature cooling water circuit 30 is switched from the radiator heat dissipation mode to the chiller cooling mode. Accordingly, as illustrated in Fig. 4, the inverter 35 and the motor generator 36 are cooled by the cooling water cooled by the chiller 17 of the refrigeration cycle device 10, so that the equipment inlet water temperature decreases.

At this time, the pressure of the cooling water of the low-temperature cooling water circuit 30 has increased, so that the cooling water is quickly supplied to the inverter 35 and the motor generator 36, and the equipment inlet water temperature quickly decreases. In response to switching from the radiator heat dissipation mode to the chiller cooling mode, the rotational speed of the low-temperature side pump 31 is decreased to the original.

In the present embodiment, the control device 60 increases the rotational speed of the low-temperature side pump 31 when the estimated temperature of the inverter 35 and the motor generator 36 is judged as exceeding the switching temperature PT2 which is lower than the upper limit temperature PT1.

Accordingly, switching to the chiller cooling mode is possible in a state in which the pressure of the cooling water is high, so that the cooling water can be quickly supplied to the inverter 35 and the motor generator 36 in response to switching to the chiller cooling mode.

In the present embodiment, the control device 60 increases the rotational speed of the low-temperature side pump 31 as the estimated temperature of the inverter 35 and the motor generator 36 approaches the upper limit temperature PT1. Accordingly, the pressure of the heat medium can be increased as the timing of switching to the chiller cooling mode is approached.

(Fifth embodiment)

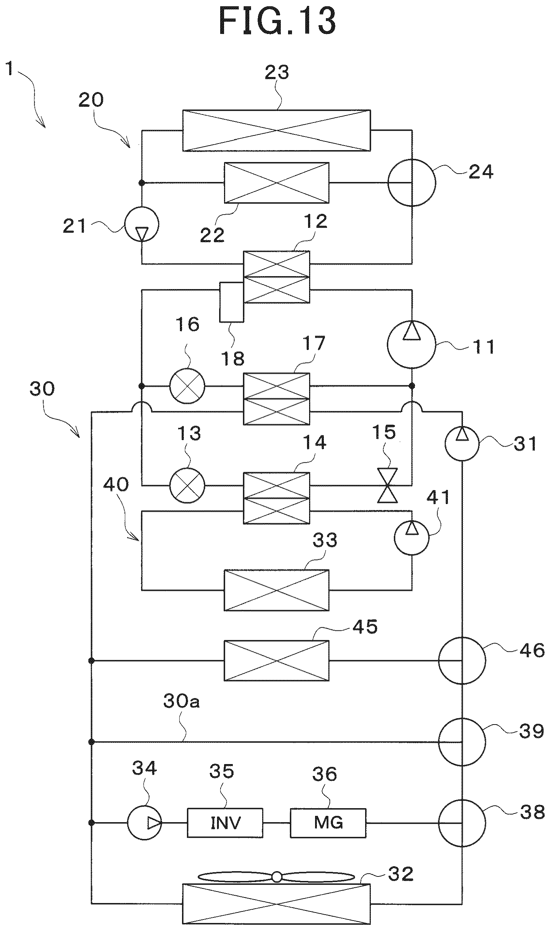

Although the battery 33 is cooled by the cooling water of the low-temperature cooling water circuit 30 while air to be sent into the vehicle interior is cooled by the first evaporator 14 in the above-described embodiment, the battery 33 is cooled by the cooling water cooled in the first evaporator 14 while air to be sent into the vehicle interior is cooled by the cooling water of the low-temperature cooling water circuit 30 as illustrated in Fig. 13 in the present embodiment.

The first evaporator 14 of the present embodiment is a battery chiller which exchanges heat between a low-pressure refrigerant discharged from the first expansion valve 13 and a cooling water of a battery cooling water circuit 40. The cooling water of the battery cooling water circuit 40 is fluid as a heat medium. In the present embodiment, liquid containing at least ethylene glycol, dimethylpolysiloxane, or nanofluid, or antifreeze liquid is used as the battery cooling water circuit 40.

A battery pump 41 is disposed to the battery cooling water circuit 40. The battery pump 41 is a heat medium pump which absorbs and discharges the cooling water.

A cooler core 45 and a cooler core three-way valve 46 are disposed to the low-temperature cooling water circuit 30. The cooler core 45 is a heat medium-air heat exchanger which exchanges heat between a cooling water cooled by the chiller 17 and air to be sent into the vehicle interior to cool the air. The cooler core three-way valve 46 switches the flow of the cooling water to the cooler core 45. The operation of the cooler core three-way valve 46 is controlled by the control device 60.

In the present embodiment, the same working effect as that in the above-described embodiments can be exerted by adopting the control of the above-described embodiments.

The present disclosure is not limited to the above-described embodiments, which can be variously modified within a scope that does not depart from the spirit of the present disclosure.

Although the cooling water is used as a heat medium in the above-described embodiments, various media such as oil may be used as a heat medium. As the heat medium, a nanofluid may be used. Nanofluid refers to fluid into which nanoparticles having a nanometer-order particle diameter are mixed.

Although a fluorocarbon-based refrigerant is used as a refrigerant in the refrigeration cycle device 10 of the above-described embodiments, the type of the refrigerant is not limited thereto and may be a natural refrigerant such as carbon dioxide, a hydrocarbon-based refrigerant, or the like.

Further, although the refrigeration cycle device 10 of the above-described embodiments configures a subcritical refrigeration cycle in which the high-pressure side refrigerant pressure does not exceed the critical pressure of the refrigerant, a supercritical refrigeration cycle in which the high-pressure side refrigerant pressure exceeds the critical pressure of the refrigerant may be configured.

Although the high-temperature side radiator 23 and the low-temperature side radiator 32 are separate radiators in the above-described embodiments, the high-temperature side radiator 23 and the low-temperature side radiator 32 may be configured by one radiator.

For example, the tank of the high-temperature side radiator 23 and the tank of the low-temperature side radiator 32 may be integrated to each other such that the high-temperature side radiator 23 and the low-temperature side radiator 32 are configured by one radiator.

Although the second expansion valve 16 is configured by integrating a decompression unit for decompressing the refrigerant and a blocking unit for blocking the flow of the refrigerant by fully closing the flow path of the refrigerant in the above-described embodiments, the blocking unit for blocking the flow of the refrigerant may be separated from the second expansion valve 16.

Although the condenser 12 of the above-described embodiments is a heat exchanger which exchanges heat between the refrigerant and the cooling water, the condenser 12 may be a heat exchanger which exchanges heat between the refrigerant and air.

Although the battery 33 is cooled by the cooling water cooled by the refrigerant in the above-described embodiments, the battery 33 may be directly cooled by the refrigerant or may be cooled by air cooled by the refrigerant.

Although the refrigeration cycle device 10 is configured as a receiver cycle having the receiver 18 in the above-described embodiments, the refrigeration cycle device 10 may be configured as an accumulator cycle having an accumulator.

The refrigeration cycle device disclosed herein has the following features.

(Item 1) A refrigeration cycle device including:

a heat medium circuit (30) through which a heat medium circulates;
power train equipment (35, 36) that is electrical equipment for generating a driving force for running a vehicle and is cooled by the heat medium;
a radiator (32) that exchanges heat between the heat medium and outside air;
a chiller (17) that exchanges heat between a refrigerant of a refrigeration cycle and the heat medium;
a circuit switching unit (38) that switches the heat medium circuit between a first circulation state in which the heat medium circulates between the power train equipment and the radiator and a second circulation state in which the heat medium circulates between the power train equipment and the chiller; and
a control unit (60) that controls a heat balance of the power train equipment such that in the second circulation state, a temperature related to a temperature of the power train equipment does not exceed an upper limit temperature (WT1, PT1).

(Item 2) The refrigeration cycle device according to item 1 in which the control unit controls the heat balance of the power train equipment by restricting an output of the power train equipment such that the temperature related to the temperature of the power train equipment does not exceed the upper limit temperature in the second circulation state.

(Item 3) The refrigeration cycle device according to item 2 in which in response to the output of the power train equipment reaching a predetermined output (MP1), the control unit determines to switch to the second circulation state and restricts the output of the power train equipment until a temperature of the heat medium for cooling the power train equipment reaches the upper limit temperature or lower.

(Item 4) The refrigeration cycle device according to item 1 in which the control unit controls the heat balance of the power train equipment by controlling the circuit switching unit such that the temperature related to the temperature of the power train equipment does not exceed the upper limit temperature in the second circulation state.

(Item 5) The refrigeration cycle device according to item 4 in which

the control unit
calculates an estimated output and an estimated temperature of the power train equipment based on information related to a running state of the vehicle, and
controls the circuit switching unit to switch to the second circulation state such that the temperature related to the temperature of the power train equipment does not exceed the upper limit temperature, when the estimated temperature of the power train equipment is judged as exceeding the upper limit temperature.

(Item 6) The refrigeration cycle device according to item 5, in which the control unit determines the upper limit temperature based on a running mode of the vehicle.

(Item 7) The refrigeration cycle device according to item 5 or 6, including a heat medium pump (31) which pressure-feeds the heat medium,

in which the control unit increases a rotational speed of the heat medium pump when the estimated temperature of the power train equipment is judged as exceeding a switching temperature (PT2) which is lower than the upper limit temperature.

(Item 8) The refrigeration cycle device according to item 7, in which the control unit increases the rotational speed of the heat medium pump as the estimated temperature of the power train equipment approaches the upper limit temperature.

The present disclosure has been described in accordance with examples, but it is understood that the present disclosure should not be limited to the examples and configurations. The present disclosure encompasses various modified examples and modifications within an equivalent range. In addition, various combinations and forms as well as other combinations and forms including one or more/less elements thereto are also within the spirit and scope of the present disclosure.

**Claims**

1. A refrigeration cycle device comprising:

   a heat medium circuit (30) through which a heat medium circulates;
   power train equipment (35, 36) that is electrical equipment for generating a driving force for running a vehicle and is cooled by the heat medium;
   a radiator (32) that exchanges heat between the heat medium and outside air;
   a chiller (17) that exchanges heat between a refrigerant of a refrigeration cycle and the heat medium;
   a circuit switching unit (38) that switches the heat medium circuit between a first circulation state in which the heat medium circulates between the power train equipment and the radiator and a second circulation state in which the heat medium circulates between the power train equipment and the chiller; and
   a control unit (60) that controls a heat balance of the power train equipment such that in the second circulation state, a temperature related to a temperature of the power train equipment does not exceed an upper limit temperature (WT1, PT1).

2. The refrigeration cycle device according to claim 1, wherein the control unit controls the heat balance of the power train equipment by restricting an output of the power train equipment such that the temperature related to the temperature of the power train equipment does not exceed the upper limit temperature in the second circulation state.

3. The refrigeration cycle device according to claim 2, wherein in response to the output of the power train equipment reaching a predetermined output (MP1), the control unit determines to switch to the second circulation state and restricts the output of the power train equipment until a temperature of the heat medium for cooling the power train equipment reaches the upper limit temperature or lower.

4. The refrigeration cycle device according to claim 1, wherein the control unit controls the heat balance of the power train equipment by controlling the circuit switching unit such that the temperature related to the temperature of the power train equipment does not exceed the upper limit temperature in the second circulation state.

5. The refrigeration cycle device according to claim 4,

   wherein the control unit
   calculates an estimated output and an estimated temperature of the power train equipment based on information related to a running state of the vehicle, and
   controls the circuit switching unit to switch to the second circulation state such that the temperature related to the temperature of the power train equipment does not exceed the upper limit temperature, when the estimated temperature of the power train equipment is judged as exceeding the upper limit temperature.

6. The refrigeration cycle device according to claim 5, wherein the control unit determines the upper limit temperature based on a running mode of the vehicle.

7. The refrigeration cycle device according to claim 5 or 6, comprising a heat medium pump (31) which pressure-feeds the heat medium,
wherein the control unit increases a rotational speed of the heat medium pump when the estimated temperature of the power train equipment is judged as exceeding a switching temperature (PT2) which is lower than the upper limit temperature.

8. The refrigeration cycle device according to claim 7, wherein the control unit increases the rotational speed of the heat medium pump as the estimated temperature of the power train equipment approaches the upper limit temperature.

**FIG.1**

# FIG.2

60

| | | |
|---|---|---|
| 61 — INSIDE AIR TEMPERATURE SENSOR | 60a | COMPRESSOR — 11 |
| 62 — OUTSIDE AIR TEMPERATURE SENSOR | 60b | FIRST EXPANSION VALVE — 13 |
| 63 — SOLAR RADIATION SENSOR | 60c | SECOND EXPANSION VALVE — 16 |
| 64 — FIRST EVAPORATOR TEMPERATURE SENSOR | | HIGH-TEMPERATURE SIDE PUMP — 21 |
| 65 — SECOND EVAPORATOR TEMPERATURE SENSOR | CONTROL DEVICE | ON-OFF VALVE — 24 |
| 66 — LOW-TEMPERATURE COOLING WATER TEMPERATURE SENSOR | | ELECTRIC HEATER — 25 |
| 67 — BATTERY TEMPERATURE SENSOR | 60d | LOW-TEMPERATURE SIDE PUMP — 31 |
| 68 — OPERATION PANEL | 60e | POWER TRAIN PUMP — 34 |
| | 60f | THREE-WAY VALVE — 37, 38, 39 |
| | | INSIDE/OUTSIDE AIR SWITCHING DOOR — 52a |
| 75 — CAR NAVIGATION DEVICE | | INTERIOR FAN — 53 |

| | |
|---|---|
| 71 — INVERTER TEMPERATURE SENSOR | POWER TRAIN CONTROL DEVICE — 70 |
| 72 — MOTOR GENERATOR TEMPERATURE SENSOR | |

# FIG.3

RADIATOR HEAT DISSIPATION MODE

# FIG.4

CHILLER COOLING MODE

# FIG.5

```
                    ┌─────────┐
                    │  START  │
                    └────┬────┘
                         │
          ┌──────────────────────────┐
          │ ACQUIRE INVERTER/MOTOR   │──S100
          │      TEMPERATURE         │
          └──────────────┬───────────┘
                         │
          ┌──────────────────────────┐
          │    CALCULATE MOTOR       │──S110
          │    REQUIRED OUTPUT       │
          └──────────────┬───────────┘
                         │            S130
                      ◇─────────◇
          NO      ◇   MOTOR OUTPUT   ◇
     ┌────────────◇     > MP1 ?      ◇
     │            ◇─────────────────◇
     │                   │ YES
     │    S140           │              S150
  ┌──────────────┐  ┌──────────────────────┐
  │ RADIATOR HEAT│  │  CHILLER COOLING MODE│
  │DISSIPATION   │  └──────────┬───────────┘
  │   MODE       │             │         S160
  └──────┬───────┘          ◇──────◇
         │          ◇   INVERTER/      ◇   NO
         │      ◇  MOTOR INLET WATER    ◇──────┐
         │          ◇  TEMPERATURE      ◇      │
         │              ◇  < WT1 ?   ◇         │
         │                  ◇─────◇            │
         │                   │ YES   S170      │  S180
         │          ┌──────────────────────┐ ┌──────────────────────┐
         │          │ DRIVE MOTOR ACCORDING│ │ REQUIRED OUTPUT ON    │
         │          │   TO REQUIRED OUTPUT │ │     STANDBY           │
         │          └──────────┬───────────┘ │(CURRENT OUTPUT KEPT)  │
         │                     │             └──────────┬───────────┘
         └─────────────────────┼────────────────────────┘
                          ┌─────────┐
                          │ RETURN  │
                          └─────────┘
```

# FIG.6

ACCELERATOR OPENING

MOTOR OUTPUT

REQUIRED OUTPUT

ACTUAL OUTPUT

THRESHOLD MP1

CIRCULATION MODE

CHILLER COOLING

RADIATOR HEAT DISSIPATION

INVERTER/MOTOR INLET WATER TEMPERATURE

UPPER LIMIT TEMPERATURE WT1

TIME

# FIG.7

```
                    ┌─────────────┐
                    │    START    │
                    └──────┬──────┘
                           │
              ┌────────────┴────────────┐
              │  ACQUIRE INVERTER/      │──── S200
              │  MOTOR TEMPERATURE      │
              └────────────┬────────────┘
                           │
              ┌────────────┴────────────┐
              │  CALCULATE MOTOR        │──── S210
              │  REQUIRED OUTPUT        │
              └────────────┬────────────┘
                           │
              ┌────────────┴────────────┐
              │  ESTIMATE INVERTER/     │──── S220
              │  MOTOR TEMPERATURE BY   │
              │  REQUIRED OUTPUT        │
              └────────────┬────────────┘
                           │  S230
```

S230

INVERTER/ MOTOR ESTIMATED TEMPERATURE > PT1 ?   NO

S250

INVERTER/ MOTOR ESTIMATED TEMPERATURE < PT2 ?   NO

YES

YES

S240

CHILLER COOLING MODE

S260

RADIATOR HEAT DISSIPATION MODE

S270

CHILLER COOLING MODE

RETURN

# FIG.8

# FIG.9

START

ACQUIRE RUNNING MODE SELECTION INFORMATION —S300

S310

ECO MODE ?    NO

YES    S320

DETERMINED TO ECO UPPER LIMIT TEMPERATURE $\alpha e$

S330

SET MOTOR MAXIMUM RATING LOWER

S340

SPORTS MODE ?    NO

YES    S350

DETERMINED TO SPORTS UPPER LIMIT TEMPERATURE $\alpha s$

S360

DETERMINED TO NORMAL UPPER LIMIT TEMPERATURE $\alpha n$

RETURN

# FIG.10

# FIG.11

```
                    ┌─────────────┐
                    │    START    │
                    └──────┬──────┘
                           │
         ┌─────────────────┴─────────────────┐
         │  ACQUIRE INVERTER/MOTOR           │ ⌒S400
         │       TEMPERATURE                 │
         └─────────────────┬─────────────────┘
                           │      ⌒S410
                        ╱──┴──╲
                      ╱  INVERTER/ ╲          NO
                     ╱ MOTOR TEMPERATURE ╲────────────┐
                      ╲    > PT2 ?    ╱                │
                        ╲──┬──╱                        │
                         YES    ⌒S430                  │
         ┌─────────────────┴─────────────────┐        │
         │  INCREASE ROTATIONAL SPEED        │        │
         │     OF WP OF LOW WATER            │        │
         │   TEMPERATURE CIRCUIT             │        │
         └─────────────────┬─────────────────┘        │
                           │      ⌒S440               │
                        ╱──┴──╲                        │
                      ╱  INVERTER/ ╲          NO       │
                     ╱ MOTOR TEMPERATURE ╲─────────────┤
                      ╲    > PT1 ?    ╱                │
                        ╲──┬──╱                        │
                         YES    ⌒S450        ⌒S420     │
         ┌─────────────────┴────────┐  ┌──────────────┴──────────────┐
         │   CHILLER COOLING MODE   │  │ RADIATOR HEAT DISSIPATION MODE│
         └─────────────┬────────────┘  └─────────────────────────────┘
         ┌─────────────┴─────────────────┐
         │  DECREASE ROTATIONAL SPEED    │ ⌒S460
         │     OF WP OF LOW WATER        │
         │   TEMPERATURE CIRCUIT         │
         └─────────────┬─────────────────┘
                       │◄──────────────────────────────┘
                ┌──────┴──────┐
                │   RETURN    │
                └─────────────┘
```

# FIG.12

# FIG.13

## INTERNATIONAL SEARCH REPORT

| International application No. |
|---|
| **PCT/JP2024/006570** |

**A. CLASSIFICATION OF SUBJECT MATTER**

*B60L 3/00*(2019.01)i; *B60K 11/04*(2006.01)i; *F25B 1/00*(2006.01)i
FI: B60L3/00 J; B60K11/04 G; F25B1/00 399Y

According to International Patent Classification (IPC) or to both national classification and IPC

**B. FIELDS SEARCHED**

Minimum documentation searched (classification system followed by classification symbols)

B60L3/00; B60K11/04; F25B1/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2019-124393 A (DENSO CORPORATION) 25 July 2019 (2019-07-25) paragraphs [0078]-[0101], fig. 2 | 1-4 |
| A | | 5-8 |
| A | JP 6791052 B2 (DENSO CORPORATION) 25 November 2020 (2020-11-25) entire text, all drawings | 1-8 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 May 2024** | **14 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT
### Information on patent family members

International application No.

**PCT/JP2024/006570**

| Patent document cited in search report | | | Publication date (day/month/year) | Patent family member(s) | | | Publication date (day/month/year) |
|---|---|---|---|---|---|---|---|
| JP | 2019-124393 | A | 25 July 2019 | US | 2020/0340758 | A1 | |
| | | | | paragraphs [0085]-[0107], fig. 2 | | | |
| | | | | WO | 2019/138695 | A1 | |
| | | | | CN | 111602024 | A | |
| JP | 6791052 | B2 | 25 November 2020 | US | 2020/0164719 | A1 | |
| | | | | WO | 2019/026528 | A1 | |
| | | | | KR | 10-2019-0122765 | A | |
| | | | | CN | 110621525 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023032909 A

- JP 6791052 B